Europäisches Patentamt

European Patent Office

Office européen des brevets

(11) Publication number: **0 161 060**
**A1**

## (12) EUROPEAN PATENT APPLICATION

(21) Application number: **85302303.4**

(22) Date of filing: **02.04.85**

(51) Int. Cl.⁴: **C 08 F 210/16**

(30) Priority: 09.04.84 US 598256
08.03.85 US 708742

(43) Date of publication of application:
13.11.85 Bulletin 85/46

(84) Designated Contracting States:
BE DE FR GB IT NL SE

(71) Applicant: NORTHERN PETROCHEMICAL COMPANY
3100 Golf Road
Rolling Meadows Illinois 60008(US)

(72) Inventor: Pullukat, Thomas Joseph
710 Charleston Lane
Hoffman Estates Illinois 60172(US)

(72) Inventor: Lynch, Michael William
47 Weiss Avenue
Flourtown Pennsylvania 19031(US)

(72) Inventor: Shida, Mitsuzo
68 Timber Lake Drive
Barrington Illinois 60010(US)

(74) Representative: Spencer, Graham Easdale et al,
Northumberland House 303-306 High Holborn
London WC1V 7LE(GB)

(54) Copolymerization of ethylene.

(57) Ethylene is copolymerized or interpolymerized with at least one olefinic comonomer having 3 to 18 carbon atoms to produce linear low density polyethylene copolymers in a slurry process using liquid propane as the diluent. The copolymer products have desirable physical properties including relatively narrow molecular weight distributions and low elasticities.

Croydon Printing Company Ltd.

- 1 -

## Copolymerization of ethylene

This invention is concerned with the copolymerization of ethylene with other olefins and, in particular, with a method of copolymerizing ethylene and another olefin to obtain linear low density polyethylene copolymers.

U.S. Patent No. 3,087,917 discloses a process of polymerizing ethylene in the presence of a liquid reaction medium and a catalyst to produce polymers in the form of solid particles which are dispersed in the liquid reaction medium as they are formed. This type of reaction method is known to those skilled in the art as a "slurry" polymerization process and is widely used for the production of high density polyethylene.

Such slurry processes conventionally use isobutane, pentane, hexane or a similar saturated aliphatic hydrocarbon as the liquid reaction medium (also referred to as the "diluent"). However, when applied to the production of ethylene/olefin copolymers and especially the type of copolymer known as "linear low density polyethylene (LLDPE)", conventional slurry processes, including the so-called "particle form" process, exhibit certain disadvantages. For example, the operable reaction temperature is limited because, at high temperatures, linear low density polyethylene goes into solution and heat transfer and production rates are adversely affected.

Furthermore, complete separation of the comonomer and
the reaction medium is difficult and product copolymers
generally exhibit relatively broad molecular weight
distributions and contain undesirably high amounts of wax.
The bulk density of copolymers produced by prior slurry
processes tends to be low.

We have now developed an improved slurry polymerization process for making linear low density polyethylenes.

According to the invention, there is provided a
method of making linear low density polyethylene, which
comprises copolymerizing or interpolymerizing ethylene
and at least one 1-olefin comonomer having from 3 to 18
carbon atoms in a single step in the presence of a polymerization catalyst dispersed in liquid propane at a
temperature and pressure and proportion of 1-olefin to
ethylene such that a linear low density polyethylene
product having a density of from 0.90 to 0.945 g/cc is
formed as discrete solid particles dispersed in the
liquid propane and having a narrow molecular weight distribution as measured by an $R_D$ value of 4 or less.

This method is more economical than slurry
processes using isobutane, hexane or other liquid
diluents and provides product copolymers having more
desirable physical properties. Thus, propane is less
expensive and has a lower heat of vaporization than liquid
diluents used in prior slurry polymerization processes,
such as isobutane and hexane. In the so-called "particle
form" process, the use of propane allows operation of the
reactor without fouling of the reactor at a higher
temperature during linear low density polymer synthesis
than does the use of isobutane. Since propane is more
volatile, there is more residual sensible heat remaining,
which allows more efficient flash separation of the
product polymer from the diluent.

Since propane is a relatively poor solvent for linear low density polyethylene, the viscosity of the product/reaction medium slurry is low and thus the reaction mixture is easy to mix and provides for ready removal of the heat of polymerization. With the use of propane, the polymerization reaction can be conducted at a relatively high temperature without fouling of the reactor. Coincidentally, such high temperatures (e.g. 75-85°C, and preferably 76-82°C) lead to relatively high catalyst reactivities.

Additionally, it has surprisingly been found that copolymers and terpolymers produced in the slurry process using propane as the liquid diluent exhibit relatively low elasticities, as measured by $L_s$ values, typically below 3.0, as compared to prior art values of greater than 50, and relatively narrow molecular weight distributions, as measured by rheological dispersity ($R_D$) as described in Shida et al, <u>Polymer Engineering and Science</u>, Vol. 11, No. 2, pages 124-128 (1971). $R_D$ values of products made according to the invention are below 4.0, and preferably below 3.5, as compared to prior art values greater than 4.0 and, in most cases, greater than 5.0. These properties of polymers made according to the invention provide desirably high impact properties.

Copolymer and terpolymer products of the invention are produced as discrete particles having substantially uniform size and shape characteristics, as opposed to products of the prior art which are highly non-uniform in size and shape, which are often produced in agglomerated form.

Comonomers useful in the inventive method are 1-olefins having from 3 to 18 carbon atoms. Suitable 1-olefin comonomers include, but are not limited to, propylene, 1-butene, 1-pentene, 1-hexene, 4-methyl-1-pentene, 1-octene, 1-decene, 1-dodecene, and 1-octadecene, of which 1-butene, 1-hexene, or 1-octene are particularly preferred. In the case of butene, nearly complete separation of the polymer from the reaction medium and the comonomer is possible with simple flash evaporation. In the case of 1-hexene, additional drying may be necessary, but the load on the dryer is much less than when isobutane or another prior art diluent is used.

As is well known in the art, the proportion of comonomer to ethylene may be varied to give copolymer products having desired densities. For example, linear low density polyethylene may be prepared by selecting the proportion of butene, hexene or octene comonomers. For 1-butene, it is preferred that from 1 to 10 mole percent of butene should be present in the copolymer product. The corresponding preferred percentage for 1-hexene is from 0.5 to 10 mole percent, and from 0.5 to 5 mole percent in the case of 1-octene.

Linear low density polyethylene is conventionally defined as an ethylene/1-olefin copolymer having a density of from 0.90 to 0.945 g/cc and having a substantial absence of long chain branching, but a high degree of short chain branching.

The polymerization reaction may be carried out in any convenient type of reactor, such as a loop reactor, an autoclave, or a tubular reactor. The reaction is carried out under polymerizing conditions of temperature and pressure wherein the propane is maintained in the liquid state. The critical temperature of propane is about 96.8°C and is independent of pressure; it is therefore preferred that the reaction be carried out below that temperature.

While the reaction may be carried out at lower temperatures, it has been found preferable to operate at 75 to 85°C and, more preferably, 76 to 82°C, as these temperatures give relatively high catalyst reactivity.

In general, the reaction is carried out with the catalyst dispersed in the liquid propane in the presence of ethylene and the comonomer. The copolymer or terpolymer product is produced in the form of particles which are dispersed in the liquid propane as a slurry.

Some prior art processes for the production of low density copolymers of ethylene require a pre-polymerization step in which ethylene (in an amount of up to 20% of the total ethylene and 1-olefin monomers to be polymerized) is pre-polymerized in the presence of a catalyst which is dispersed in a slurry in a liquid diluent prior to copolymerization with the 1-olefin comonomer. The pre-polymerization step provides a catalyst slurry which incorporates the catalyst and ethylene homopolymer.

Such a pre-polymerization step is neither necessary nor desired according to the present invention, in which propane diluent, catalyst, and ethylene and 1-olefin comonomers may be introduced simultaneously to the reaction vessel. Also, the copolymerization reaction of the invention is advantageously carried out in a single step, as opposed to two step copolymerization reactions of the prior art.

After the reaction is completed, the polymer is physically separated from the liquid propane and the comonomer by any suitable means. Since propane is relatively volatile as compared to prior diluents, it is highly suited for flash evaporation separation of the polymer from the diluent and comonomer. If the comonomer has a relatively high carbon number, additional drying may be required, but the load on the dryer is much less than in prior systems.

If desired, separation of the product from the diluent can be carried out by mechanical means, such as centrifuging, for example.

Any polymerization catalyst which is suitable for the production of ethylene/1-olefin copolymers of the type conventionally referred to as "linear low density polyethylene" and described herein can be used with this invention. Such catalysts include modified Ziegler catalysts, but modified chromium catalysts, such as chromium oxide catalysts generally referred to as "Phillips-type" catalysts, are not suitable for the production of linear low density polyethylene copolymers, because they produce products having undesirably broad molecular weight distributions.

Preferred catalysts are so-called Ziegler catalysts incorporating a transition metal selected from Groups IV and V of the Periodic Table, used with an alkyl aluminum cocatalyst. Titanium-containing catalysts are preferred and catalysts useful in the invention may be supported or unsupported.

Suitable catalysts include those described in British Specification 2,068,007, U.S. Patent Application Ser. No. 590,157 and U.S. Patent 4,499,198. Such catalysts are prepared by reacting one or more magnesium silylamide compounds such as are disclosed in U.S. Patent 4,383,119 with at least one compound of a transition metal selected from Groups IIIB, IVB, VB and VIB of the fourth and fifth periods of the Periodic Table and Group VIIB and VIIIB of the fourth period of the Periodic Table. Such catalysts may optionally include one or more of a Lewis Acid, a Lewis Base, a hydrogen halide or zirconium tetrachloride in addition to the magnesium and titanium transition metal compound.

It is important that the transition metal compound of any catalyst used in the invention be chosen for its ability to produce linear low density polyethylene products having molecular weight distributions which are conventionally referred to in the art as "narrow"; products having narrow molecular weight distributions characterized as having rheological dispersity $(R_D)$ values of less than 4 are obtained in accordance with the invention.

In order that the invention may be more fully understood, the following examples are given by way of illustration only; Examples A-F are not in accordance with the invention and are given for the purpose of comparison, while Examples G-L are in accordance with the invention.

All polymerization testing in the following Examples was conducted utilizing a catalyst system prepared as described in British Specification 2,068,007 using hexamethyl disilazane (HMDS)-treated silica, a titanium concentration of 1.88 mMTi/g of silica and a triisobutyl aluminum (TIBAL) cocatalyst with an aluminum/titanium ratio of about 7.0.

The catalyst preparation procedure was as follows:

1-2 grams of hexamethyl disilazane-treated Davison 952 grade silica was added to a nitrogen purged flask. After purging with nitrogen for 30 minutes, 20 ml of heptane were added to form a slurry.

To this slurry was added a 10% solution in heptane of 6.5 E Magala (Texas Alkyls). (6.5 E Magala is $\left[ (n-C_4H_9)_2Mg \right]_{6.5} \cdot Al(C_2H_5)_3$.) The Magala was added to give 1.88 mM Mg/g silane treated silica.

The slurry was stirred for 30 minutes, and neat titanium tetrachloride $(TiCl_4)$ was then added. The $TiCl_4$ was added in an amount to give 1.88 mMTi/g silane-treated silica. Hence, the molar magnesium to titanium ratio was 1.0.

The slurry was then stirred for 30 minutes, and the catalyst was dried at $90^{\circ}C$ with a nitrogen flush.

0161060

- 8 -

The catalyst was a dark brown free flowing powder with a titanium concentration of about 5.6 wt.%.

The polymerization testing procedure used in the Examples was as follows:

A 2 liter reactor was purged with nitrogen and the desired temperature was obtained. Then under a nitrogen atmosphere the catalyst and cocatalyst solution were added to the reactor. The reactor was closed and 1000 ml of diluent (propane or isobutane) were pressured into the reactor. Next, a quantity of hydrogen gas was added as a molecular weight modifier (10-50 psi). Then, simultaneously, 1-hexene was measured by a sight glass and ethylene was added to a predetermined reactor pressure. This pressure was maintained by adding ethylene on demand to the reactor.

The temperature was controlled $\pm$ 1.0$^{\circ}$C throughout a 1 hour polymerization. The reaction was terminated by shutting off the ethylene gas and venting the reactor through a remotely operated bottom valve into a catch-pot. Depending on the reaction medium used, the amount of 1-hexene (1-butene in the case of Example L) used and the temperature, the polymer was, in some cases, very "wet" with diluent and excess comonomer and was filtered to remove the excess comonomer. The polymers were dried overnight. This time was sufficient to remove excess comonomer and to obtain a dry polymer.

Ethylene concentrations were controlled by varying the partial pressure of ethylene in the system. The vapor pressure data for propane and isobutane were taken from Physical Properties of Hydrocarbons by R.W. Gallant, Gulf Publishing, Houston, Texas.

Reference is made in the following Examples to the accompanying drawings, in which:

Figure 1 is a photograph of an ethylene/1-hexene copolymer with a density of about 0.922 g/cc made by the prior art slurry process using isobutane diluent (Example D); and,

Figure 2 is a photograph of an ethylene/1-hexene copolymer with a density of about 0.922 g/cc made by the slurry process according to the invention using propane diluent (Example I).

Examples A-F (Comparative)

Several ethylene/1-hexene copolymerizations were carried out using isobutane as the diluent. The reactor temperature, partial pressure of ethylene, partial pressure of hydrogen, and 1-hexene concentrations are detailed in the Table below.

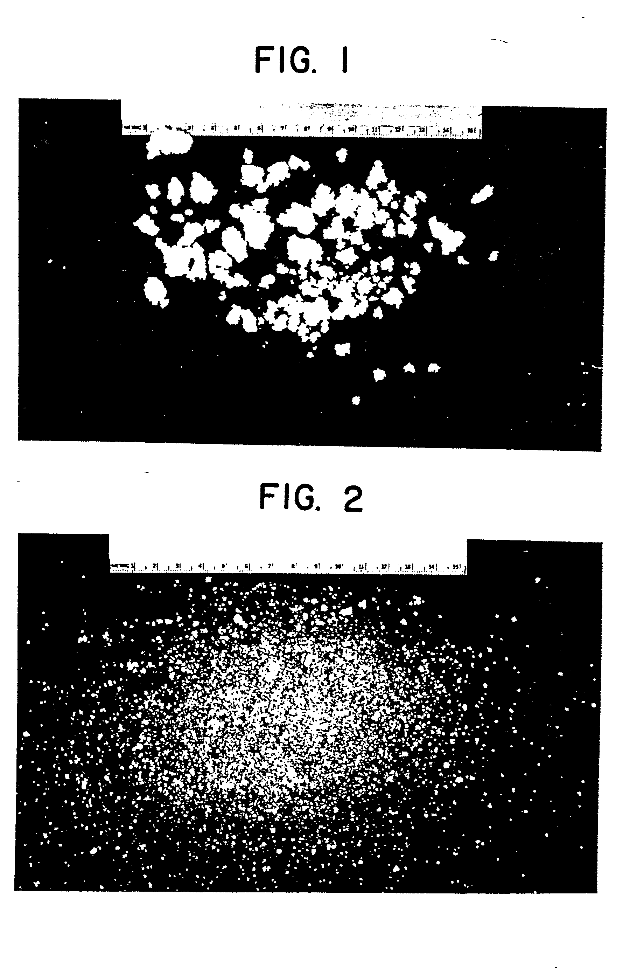

Examples A-C were carried out at $54.4^{\circ}C$ while Examples D-F were carried out at $65.5^{\circ}C$. In each case, polymers isolated from the reaction mixtures were filtered to remove excess 1-hexene. Despite this procedure, the polymers still contained considerable 1-hexene. When finally dry the polymers prepared at $65.5^{\circ}C$ were very sticky and had poor particle size and shape characteristics. (The product of Example D is shown in Figure 1). The polymers prepared at $54.4^{\circ}C$ had better particle size and shape characteristics and were less sticky. At this temperature, however, reactivity was quite low and a large amount of isobutane and 1-hexene remained in the polymer.

Polymer rheology on three samples indicate that the samples have fairly high elasticity, as evidenced by high $L_S$ values (a measure of elasticity). The polymers also have fairly broad (for Ziegler type catalysts) molecular weight distributions.

The polymerization temperature of about $54.4^{\circ}C$ is about the maximum polymerization temperature at which a polymer having a density of about 0.920 and a melt index (MI) of about 1-2 can be made with this catalyst without fear of fouling the reactor. Above this temperature polymer particle size and shape characteristics deteriorate rapidly.

Examples G-K (Invention)

Several ethylene/1-hexene copolymerizations
were carried out using propane as the liquid diluent. The
reactor temperature, ethylene partial pressure, hydrogen
partial pressure and 1-hexene concentration are detailed
in the Table. The product of Example I is shown in
Figure 2.

Example L (Invention)

An ethylene/1-butene copolymerization was
carried out in a liquid propane diluent using the catalyst
described above. The reaction conditions are given in
the Table. The polymer had a density of from 0.901 to
0.911 and was not sticky. The polymer particles had
uniform size and shape characteristics.

Examples G-L demonstrate that relatively high
polymerization temperatures can be used without reactor
fouling. For example, it is possible to polymerize at
82.2$^{o}$C without fouling with 30 wt.% 1-hexene in the
reactor. The resultant polymers all have desirably
uniform particle size and shape characteristics. The
polymers produced using liquid propane as a diluent gave
an additional unexpected advantage in the form of an
improvement in polymer properties. The polymers produced
according to the invention in a liquid propane diluent
have narrower molecular weight distributions (low $R_D$)
and low elasticities as evidenced by low $L_S$ values, as
compared to the polymers produced using an isobutane
diluent. Both are very desirable properties for an
LLDPE film resin.

| Example | Polym. Temp. °C | Ethylene Partial Press. (psi) | Hydrogen Partial Press. (psi) | 1-Hexene Conc. (wt.%) | MI (g/10 min) | Density g/cc | $R_D$ (a=2) | $L_S$ |
|---|---|---|---|---|---|---|---|---|
| | | | | ISOBUTANE DILUENT (CONTROL) | | | | |
| A | 54.4 | 65 | 40 | 20 | 1.4 | 0.931 | 5.5 > | 50 |
| B | 54.5 | 120 | 50 | 40 | 1.3 | 0.929 | 4.7 > | 50 |
| C | 54.4 | 120 | 50 | 40 | 1.0 | 0.930 | 4.7 > | 50 |
| D | 65.5 | 64 | 25 | 30 | 2.1 | 0.922 | – | – |
| E | 65.5 | 65 | 25 | 20 | 0.67 | 0.925 | – | – |
| F | 65.5 | 80 | 50 | 40 | 0.52 | 0.918 | – | – |
| | | | | PROPANE DILUENT (INVENTION) | | | | |
| G | 65.5 | 65 | 20 | 20 | 2.9 | 0.925 | – | – |
| H | 71.1 | 75 | 15 | 20 | 0.65 | 0.927 | 3.0 | 2.0 |
| I | 71.1 | 55 | 15 | 30 | 0.79 | 0.922 | 3.3 | 2.8 |
| J | 76.6 | 55 | 10 | 30 | 0.34 | 0.928 | – | – |
| K | 82.2 | 60 | 10 | 30 | 0.25 | 0.928 | – | – |
| | | | | 1-Butene wt.% | | | | |
| L | 71.1 | 70 | 5 | 16 | 3.1 | 0.910 | – | – |

0161060

GLOSSARY OF TERMS

HMDS    —    hexamethyl disilazane

LLDPE   —    linear low density polyethylene

$L_S$   —    a measure of elasticity

MI      —    melt index

$R_D$   —    rheological dispersity

TIBAL   —    triisobutyl aluminum

Claims:

1.        A method of making linear low density
polyethylene, which comprises copolymerizing or interpolymerizing ethylene and at least one 1-olefin comonomer having from 3 to 18 carbon atoms in a single step
in the presence of a polymerization catalyst dispersed in
liquid propane at a temperature and pressure and proportion of 1-olefin to ethylene such that a linear low
density polyethylene product having a density of from
0.90 to 0.945 g/cc is formed as discrete solid particles
dispersed in the liquid propane and having a narrow
molecular weight distribution as measured by an $R_D$ value
of 4 or less.

2.        A method according to claim 1, in which the
1-olefin comonomer is propylene, 1-butene, 1-pentene,
1-hexene, 4-methyl-1-pentene, 1-octene, 1-decene,
1-dodecene, or 1-octadecene.

3.        A method according to claim 1 or 2, in which the
1-olefin comonomer is 1-butene and the proportion of
1-butene to ethylene is selected to provide from 1 to 10
mole percent of 1-butene in the product.

4.        A method according to claim 1 or 2, in which the
1-olefin comonomer is 1-hexene and the proportion of
1-hexene to ethylene is selected to provide from 0.5 to
10 mole percent of 1-hexene in the product.

5.        A method according to claim 1 or 2, in which the
1-olefin comonomer is 1-octene and the proportion of
1-octene to ethylene is selected to provide from 0.5 to
5 mole percent of 1-octene in the product.

6.      A method according to any of claims 1 to 5, in which polymerization is effected at a temperature below the critical temperature of propane.

7.      A method according to any of claims 1 to 6, in which the product is separated from the diluent following the reaction by evaporation of the diluent.

8.      A method according to claim 7, in which the evaporation is carried out by flash drying under reduced pressure.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 348 231  (MITSUI TOATSU)<br>* Claims;  page  6, lines 16-26;<br>page  7, line 25 - page 8, line 3 * | 1-8 | C 08 F 210/16 |
| X | GB-A-1 283 391  (MONTECATINI)<br>* Claims 1,4; examples 1-5 * | 1-8 | |
| X | GB-A-2 051 094  (NIPPON OIL)<br>* Claims; page 2, lines 15-54 * | 1-8 | |
| X | US-A-3 225 021  (M.ERCHAK et al.)<br>* The whole document * | 1-8 | |

-----

|  |  |  | TECHNICAL FIELDS SEARCHED (Int. Cl.4) |
|---|---|---|---|
|  |  |  | C 08 F |

The present search report has been drawn up for all claims

| Place of search<br>THE HAGUE | Date of completion of the search<br>12-07-1985 | Examiner<br>DE ROECK R.G. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82